# EUROPEAN PATENT SPECIFICATION

(11) **EP 3 657 464 B1**
(45) Date of publication and mention of the grant of the patent: **06.08.2025**
(21) Application number: 18834334.7
(22) Date of filing: 11.07.2018
(51) Int. Cl.: B60W 60/00, G08G 1/16, B60W 30/09, G08G 1/09, G08G 1/0967, B60W 50/00, B60W 50/02

(54) **CONTROL DEVICE, CONTROL METHOD, AND PROGRAM**
STEUERUNGSVORRICHTUNG, STEUERUNGSVERFAHREN UND PROGRAMM
DISPOSITIF DE COMMANDE, PROCÉDÉ DE COMMANDE, ET PROGRAMME

(30) Priority: 18.07.2017 JP 2017138957
(43) Date of publication of application: 27.05.2020
(73) Proprietor: Pioneer Corporation, Tokyo 113-0021 (JP)
(72) Inventor: SHIMODAIRA Manabu, Kawagoe-shi Saitama 350-8555 (JP); YANO Kenichiro, Tokyo 113-0021 (JP); OSUGI Jun, Kawagoe-shi Saitama 350-8555 (JP)
(74) Representative: Vossius & Partner Patentanwälte Rechtsanwälte mbB
(86) International application number: PCT/JP2018/026151
(87) International publication number: WO 2019/017253

(56) References cited:
- EP-A1- 3 498 555
- WO-A1-2016/062568
- WO-A1-2016/170786
- WO-A1-2017/002471
- WO-A1-2017/047261
- DE-A1- 102016 009 655
- JP-A- 2011 240 816
- JP-A- 2017 045 130
- JP-A- 2018 024 286
- US-A1- 2010 217 476
- US-A1- 2014 371 981
- US-A1- 2015 241 880
- US-A1- 2015 309 512
- US-A1- 2017 158 175

## Description

### TECHNICAL FIELD

The present invention relates to a control device, a control method, and a program.

### BACKGROUND ART

In recent years, research and development relating to autonomous driving control have been advanced. For example, Patent Document 1 discloses a technique that performs risk prediction or the like based on a knowledge base, which stores a logical expression generated using a well-known supervised machine learning method, and utilizes the risk prediction or the like for autonomous driving control of a vehicle. Patent Document 2 describes a method for operating a vehicle, comprising detecting a driving style of the driver by monitoring his or her vehicle guidance activity, and correspondingly emulating or mimicking or imitating it. Patent Document 3 describes a method for operating a vehicle, the vehicle being controlled in a partially autonomous or autonomous driving mode based on decisions of an artificial neural network structure. Patent Document 4 describes an automatic driving device comprising a control program for inputting outside information and vehicle information, and outputting a target control value for a vehicle. Patent Document 5 relates to a vehicle traveling controller that performs traveling control of a vehicle.

### RELATED DOCUMENT

### PATENT DOCUMENT

[Patent Document 1] Japanese Unexamined Patent Publication No. 2016-91039
[Patent Document 2] US 2014/371981 A1
[Patent Document 3] DE 10 2016 009655 A1
[Patent Document 4] EP 3 498 555 A1 (published after the priority date of the patent)
[Patent Document 5] US 2010/217476 A1

### SUMMARY OF THE INVENTION

### TECHNICAL PROBLEM

A model (machine learning model) that is constructed by machine learning varies depending on input learning data, and there is a possibility that each machine learning model may have a unique characteristic. Such a machine learning model is basically considered as desirable in that the model allows optimum control based on learning data provided in constructing the model to be executable. On the other hand, input data (event) that is significantly deviated from learning data provided in constructing the model is not always appropriately dealt with. In view of this point, in a scene where stable control is demanded, or the like, there is a possibility that control based on the machine learning model is not preferable.

An example of an object to be solved by the invention is to provide a technique for enabling stable autonomous driving control.

### SOLUTION TO PROBLEM

The present invention is defined in the claims.

### BRIEF DESCRIPTION OF THE DRAWINGS

The above-described object and other objects, features, and advantages will become apparent from preferable embodiments described below and the accompanying drawings.

Fig. 1 is a diagram illustrating the outline of a control device according to the invention.
Fig. 2 is a block diagram conceptually showing the functional configuration of a control device in a first embodiment.
Fig. 3 is a diagram illustrating the hardware configuration of the control device of the first embodiment.
Fig. 4 is a flowchart illustrating a flow of processing that is executed by the control device of the first embodiment.
Fig. 5 is a diagram illustrating information in which a predetermined event and a second control rule are associated with each other.
Fig. 6 is a block diagram conceptually showing the functional configuration of a control device in a second embodiment.
Fig. 7 is a diagram illustrating the hardware configuration of the control device of the second embodiment.
Fig. 8 is a sequence diagram illustrating a flow of processing that is executed by the control device of the second embodiment.

### DESCRIPTION OF EMBODIMENTS

### [Outline Description]

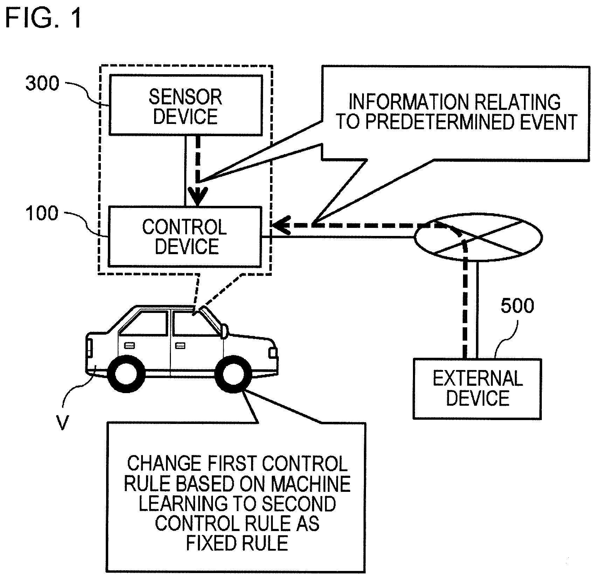

Fig. 1 is a diagram illustrating the outline of a control device 100 according to the invention. In an example of Fig. 1, the control device 100 is a device (for example, an electronic control unit (ECU) or the like) that is mounted in a vehicle V. The control device 100 can change a first control rule that is changed (optimized) by machine learning, and a second control rule that is a fixed rule without depending on the machine learning. As will be described below in detail, while autonomous driving of the vehicle is being performed using the first control rule based on machine learning, in a case where a predetermined event to be a trigger of changing a control rule of the autonomous driving is detected, the control device 100 changes the control rule of the autonomous driving to the second control rule that is the fixed rule according to the event. Information relating to the predetermined event to be the trigger of changing the control rule of the autonomous driving can be output from a sensor device 300 that is mounted in the vehicle V or can be acquired from an external device 500. The external device 500 is, for example, a device similar to the control device 100 that is mounted in another vehicle that is not illustrated, a road-to-vehicle communication device that is provided along a road, or the like.

Hereinafter, an embodiment of the invention will be described referring to the drawings. In all drawings, the same components are represented by the same reference numerals, and description thereof will not be repeated. Except for a case where particular description is provided, each block in a block diagram is not a configuration of a hardware unit but a configuration of a functional unit.

### [First Embodiment]

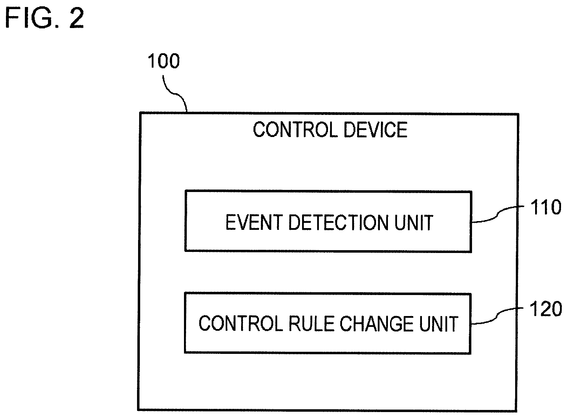

Fig. 2 is a block diagram conceptually showing the functional configuration of the control device 100 in a first embodiment. As shown in Fig. 2, the control device 100 of the embodiment has an event detection unit 110 and a control-rule change unit 120.

The event detection unit 110 determines whether or not the predetermined event is detected while the vehicle is performing the autonomous driving using the first control rule based on the machine learning. The predetermined event is the event to be the trigger of changing the control rule at the time of the autonomous driving of the vehicle. The predetermined event can also be expressed as an event indicating a timing at which control of the autonomous driving using the first control rule based on the machine learning is interrupted. A specific example of the predetermined event will be described below. The event detection unit 110 can detect the predetermined event on the basis of a result of analysis of outputs from various sensor devices 300 mounted in the own vehicle. The event detection unit 110 may perform communication with an external device (the control device mounted in another peripheral vehicle or the road-to-vehicle communication device provided along the road) and may detect the predetermined event by way of the external device. The event detection unit 110 may detect the predetermined event on the basis of dynamic information included in map data for autonomous driving to be used at the time of the autonomous driving of the vehicle V. Here, the map data for autonomous driving is map data that is called, for example, a "dynamic map", and is data including conventional map information (static information), and information (dynamic information) that varies in real time. The dynamic information includes information that can fluctuate in a comparatively short span (for example, in seconds), such as intelligent transport systems (ITS) look-ahead information (peripheral vehicles, pedestrian information, traffic signal information, and the like), and information (referred to as "quasi-dynamic information") that can fluctuate in a slightly short span (for example, in minutes), such as accident information, congestion information, and narrow area weather information. The static information includes information that can fluctuate in a comparatively long span (for example, in months) , such as road surface information, lane information, and three-dimensional structures, and information (referred to as "quasi-static information") that can fluctuate in a slightly long span (for example, in hours), such as traffic control information, road construction information, and wide area weather information. In the invention, the quasi-static information may be classified into the category of the dynamic information. The static information and the dynamic information included in the map data for autonomous driving are not limited to the examples described herein. In the map data for autonomous driving, various kinds of information that can be utilized for the autonomous driving control of the vehicle can be included.

While the vehicle is performing the autonomous driving using the first control rule based on the machine learning, in a case where an event is detected by the event detection unit 110, the control-rule change unit 120 changes the control rule of the autonomous driving of the vehicle to the second control rule that is the fixed rule according to the detected event.

The first control rule that each vehicle uses at the time of the autonomous driving is a rule based on the machine learning as described above. For this reason, in an operation of the vehicle when the first control rule is used, a unique feature according to a learning result of provided learning data can appear. Then, in a case where control at the time of the autonomous driving is performed using the first control rule, there is a possibility that an unpredictable unstable operation is performed due to the unique feature of the first control rule. In regard to this point, in the embodiment, in a case where the predetermined event is detected while the autonomous driving is being performed with the first control rule based on the machine learning, the control rule of the autonomous driving is changed to the second control rule that is the fixed rule according to the detected event. With this, since the operation of the vehicle at the time of the autonomous driving is controlled according to the fixed rule in a case where the predetermined event is detected, it is possible to suppress an unpredictable unstable operation.

In addition, at a place where a plurality of vehicles having the control device 100 are gathered, each vehicle performs the autonomous driving using the second control rule as the fixed rule instead of the first control rule based on a machine learning result, whereby it is possible to control movement of each vehicle, and as a result, to expect an effect of improving a traffic environment. For example, a case where an obstacle is present on one lane in a road having three lanes on each side, and each vehicle that is traveling on the lane needs to perform lane change in order to avoid the obstacle is considered. In this case, in a case where each vehicle moves with the first control rule having a characteristic unique to each vehicle, there may occur a problem that the vehicles concentrate on one lane of the remaining two lanes, or the like, resulting in the occurrence or deterioration of congestion. In such a case, the control device 100 of the embodiment switches the control rule of the autonomous driving of each vehicle to the fixed rule (in this case, for example, a rule that "as a behavior to avoid the obstacle, a vehicle moves to a lane different from a lane, to which a preceding vehicle moves", or the like) according to the detected event to control each vehicle, whereby it is possible to minimize the amount of congestion by dispersing the vehicles into the remaining two lanes.

Hereinafter, the control device 100 of the embodiment will be described in more detail.

### [Hardware Configuration]

Each functional configuration unit of the control device 100 may be implemented by hardware (for example, a hard-wired electronic circuit or the like) that implements each functional configuration unit or may be implemented by a combination of hardware and software (example: a combination of an electronic circuit and a program for controlling the same, or the like) . Hereinafter, a case where each functional configuration unit of the control device 100 is implemented by a combination of hardware and software will be further described.

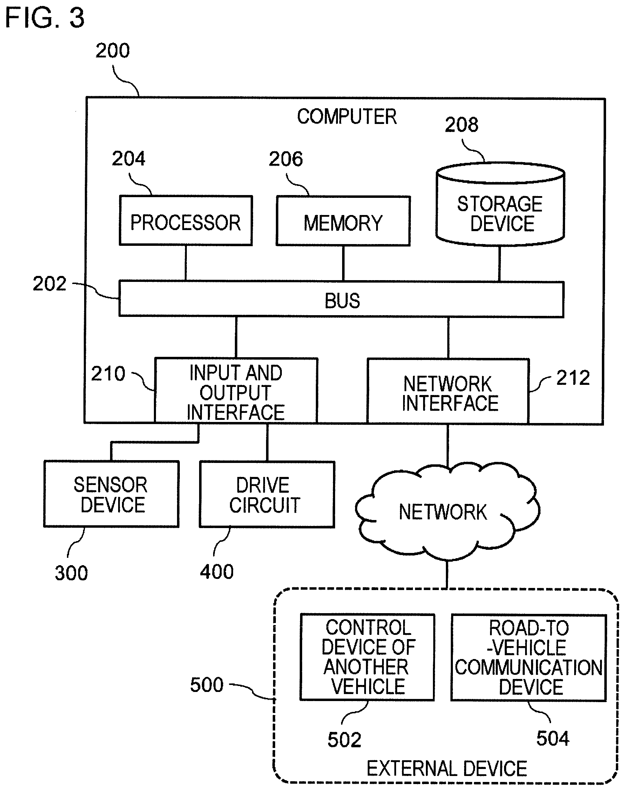

Fig. 3 is a diagram illustrating the hardware configuration of the control device 100 of the first embodiment. A computer 200 is a computer that implements the control device 100. For example, the computer 200 is an electronic control unit (ECU) that can control the operation of the vehicle at the time of the autonomous driving. The computer 200 may be a computer that is designed dedicatedly in order to implement the control device 100 or may be a general-purpose computer.

The computer 200 has a bus 202, a processor 204, a memory 206, a storage device 208, an input and output interface 210, and a network interface 212. The bus 202 is a data transmission path through which the processor 204, the memory 206, the storage device 208, the input and output interface 210, and the network interface 212 transmit and receive data to and from one another. Note that a method of connecting the processor 204 and the like to one another is not limited to bus connection. The processor 204 is an arithmetic processing device that is implemented using a microprocessor or the like. The memory 206 is a main storage device that is implemented using a random access memory (RAM) or the like. The storage device 208 is an auxiliary storage device that is implemented using a read only memory (ROM), a flash memory, or the like.

The input and output interface 210 is an interface that is provided to connect the computer 200 to peripheral equipment. Various analog signals or digital signals to be used in control of the vehicle are input or output to the computer 200 through the input and output interface 210. Here, an A/D converter that converts an analog input signal to a digital signal, a D/A converter that converts a digital output signal to an analog signal, and the like are appropriately included in the input and output interface 210.

For example, in Fig. 3, the sensor device 300 or a drive circuit 400 to be used in control of the vehicle are connected to the input and output interface 210. The sensor device 300 is light detection and ranging (LIDAR), a millimeter-wave radar, a sonar, a camera, or the like. Though not shown, a plurality of sensor devices 300 can be connected to the computer 200 through the input and output interface 210. The drive circuit 400 is a circuit that is provided to drive various mechanisms, such as a gear, an engine, and a steering mechanism of the vehicle. The control device 100 controls the operation of the drive circuit 400, thereby being able to control the operation of the vehicle at the time of the autonomous driving.

The network interface 212 is an interface that is provided to connect the computer 200 to a communication network. The communication network is, for example, a controller area network (CAN), a local area network (LAN), a wide area network (WAN), or the like. A method in which the network interface 212 is connected to the communication network may be wireless connection or may be wired connection. The computer 200 performs communication with a control device 502 of another vehicle or a road-to-vehicle communication device 504 through a wireless LAN, and can acquire information relating to an event to be used in processing of the control device 100 from the devices.

The storage device 208 stores a program module that implements various functional configuration units of the control device 100. The processor 204 reads the program module on the memory 206 and executes the program module, thereby implementing the functions of the control device 100. The storage device 208 may store the map data for autonomous driving to be used at the time of the autonomous driving of the vehicle V.

### [Flow of Processing]

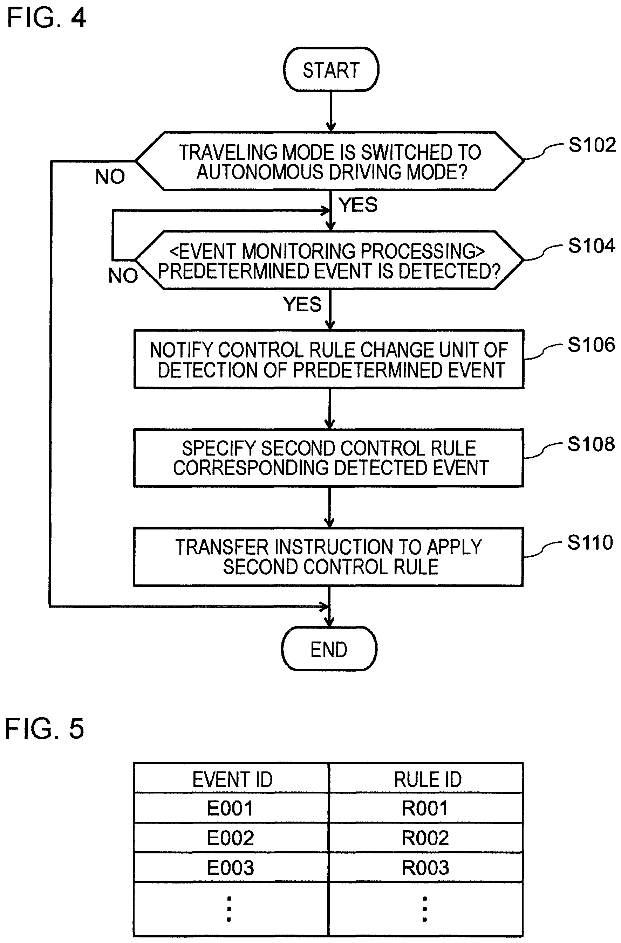

A flow of processing that is executed by the control device 100 of the embodiment will be schematically described referring to Fig. 4. Fig. 4 is a flowchart illustrating a flow of processing that is executed by the control device 100 of the first embodiment.

First, in a case where a traveling mode of the vehicle is switched to an autonomous driving mode (S102: YES), the event detection unit 110 is activated, and monitoring processing of the predetermined event is started (S104). Thereafter, in a case where the event detection unit 110 detects the predetermined event (S104: YES), the event detection unit 110 notifies the control-rule change unit 120 that the predetermined event is detected (S106).

The control-rule change unit 120 specifies the second control rule corresponding to the event notified in the processing of S106 (S108). The control-rule change unit 120 can specify the second control rule corresponding to the event detected by the event detection unit 110, for example, using a table as shown in Fig. 5. The table illustrated in Fig. 5 stores identification information of an event and identification information of the second control rule to be applied with detection of the event in association with each other. For example, the control-rule change unit 120 acquires an identifier of the event detected in the processing of S106 from the event detection unit 110 and refers to the table of Fig. 5 on the basis of the identifier of the event, thereby being able to specify the second control rule. Then, the control-rule change unit 120 transfers an instruction to apply the second control rule read in the processing of S108 to the ECU or the like that controls the autonomous driving (S110). With this, the operation of the vehicle at the time of the autonomous driving is controlled on the basis of the second control rule. The above description is just illustrative, and the operation of the control-rule change unit 120 is not limited to the operation using the table illustrated in Fig. 5. For example, in Fig. 5, although an example where the different second control rule is associated with each event has been described, the invention is not limited thereto, and the same second control rule may be associated with a plurality of events.

Hereinafter, several specific examples of a more detailed operation will be described.

### <First Specific Example>

In the specific example, a case where the event detection unit 110 detects "the occurrence of an abnormality in the sensor device 300" as the predetermined event will be described. Here, the abnormality of the sensor device 300 means stain of an optical system (lens or the like), internal failure, disturbance (sunlight, rain, fog, snow, the light of an oncoming vehicle, or the like) under a sensing environment, or an abnormality of an output signal from the sensor device 300 or communication defect between the sensor device 300 and the control device 100 due to detection of a signal meaning an error or an unexpected signal.

A case where the event detection unit 110 detects the predetermined event on the basis of "the dynamic information included in the map data for autonomous driving" will be described. As described above, the map data for autonomous driving is a digital map in which not only the static information (map information, such as road surface information, lane information, and three-dimensional structures) but also dynamic information (accident information, congestion information, weather information, pedestrian information, traffic signal information, and the like) is incorporated. Specifically, the dynamic information included in the map data for autonomous driving means the above-described dynamic information. For example, the dynamic information is delivered from a server, which manages accident information and the like, to the vehicle V. The vehicle V that receives the accident information and the like stores the accident information and the like in an area indicating the dynamic information in the map data for autonomous driving. Then, the event detection unit 110 refers to the dynamic information included in the map data for autonomous driving to be used at the time of the autonomous driving of the vehicle V, thereby being able to detect an event.

The event detection unit 110 monitors a signal line that is connected to the sensor device 300 through the input and output interface 210 and performs measurement of intensity of a signal output from the sensor device 300 or analysis of a content of the signal. Then, the event detection unit 110 determines whether or not the measured intensity of the signal is lower than a predetermined reference value or whether or not the analyzed signal is a signal meaning an error or an unexpected signal. In this case, the predetermined reference value to be compared is stored in, for example, the memory 206 or the storage device 208 in advance. In a case where detection is made that the measured intensity of the signal is lower than the predetermined reference value or the analyzed signal is a signal meaning an error or an unexpected signal, the event detection unit 110 notifies the control-rule change unit 120 to the effect that "an abnormality occurs in the sensor device 300". The control-rule change unit 120 specifies the second control rule to be applied when "an abnormality occurs in the sensor device 300" on the basis of the notification from the event detection unit 110. The second control rule in this case is not particularly limited, and is, for example, a rule that "the vehicle is stopped in a predetermined procedure (for example, turning on a hazard lamp and controlling a brake to gradually reduce a speed, or the like)", or the like.

In a case where the intensity of the output signal is lowered due to the abnormality of the sensor device 300, a probability that a control processing unit for the autonomous driving erroneously recognizes circumstances around the vehicle increases, and the operation at the time of the autonomous driving is likely to become unstable. In a case where the abnormality of the sensor device 300 is detected, the autonomous driving control is performed according to the second control rule, in which a fixed control operation is defined, whereby it is possible to restrain the operation at the time of the autonomous driving from becoming unstable. In a case where the abnormality of the sensor device 300 is detected, the control device 100 may be configured to resign control through the autonomous driving and may transfer control authority to a driver, instead of changing the control rule to the second control rule.

### <Second Specific Example>

In the specific example, a case where the event detection unit 110 detects "while the vehicle is traveling on a road having a plurality of lanes on each side, an accident occurs on at least one lane of the plurality of lanes" as the predetermined event will be described.

For example, the event detection unit 110 acquires information (for example, position coordinates on the map information, information of a lane on which the accident occurs, and the like) indicating a position of a vehicle in accident by way of the control device 502 of another vehicle or the road-to-vehicle communication device 504 provided along the road, thereby being able to detect the predetermined event. For example, in a case where the presence of the vehicle in accident is detected using various sensors mounted in the another vehicle, the control device 502 of the another vehicle can generate information informing of the presence of the vehicle in accident along with positional information (for example, the position coordinates on the map information, information of the lane on which the accident occurs, and the like) of the vehicle in accident, and can transmit the generated information through vehicle-to-vehicle communication. In this case, the event detection unit 110 performs vehicle-to-vehicle communication with the control device 502 of the another vehicle, thereby being able to detect the predetermined event by way of the control device 502 of the another vehicle. The road-to-vehicle communication device 504 can collect information informing of the presence of the vehicle in accident and the positional information of the vehicle in accident from the control device 502 of the another vehicle and can broadcast the collected information within a control area of the road-to-vehicle communication device 504. In this case, the event detection unit 110 receives information broadcasted from the road-to-vehicle communication device 504, thereby being able to detect the predetermined event by way of the road-to-vehicle communication device 504. In a case where the sensor device 300 mounted in the own vehicle is a camera having an image sensor, or the like, image data generated by the camera is analyzed, thereby being able to detect the presence or absence (predetermined event) of the vehicle in accident. Similarly, in a case where the sensor device 300 mounted in the own vehicle is LIDAR, the presence or absence (predetermined event) of the vehicle in accident may be detected on the basis of an image that is generated from point group data obtained through laser beam scanning of the LIDAR. For example, the event detection unit 110 can discriminate the presence or absence of the vehicle in accident within image data using a convolutional neural network (CNN) constructed using an image of the vehicle in accident as learning data, or the like.

In a case where the event detection unit 110 detects the predetermined event, as an example, the control-rule change unit 120 changes the control rule to be used at the time of the autonomous driving to a default rule before the first control rule is constructed by the machine learning. Here, the default rule is a control rule in an initial state in which the machine learning is not performed, and in other words, can be referred to as a control rule having no unique characteristic. The autonomous driving is controlled using such a default rule, whereby it is possible to suppress an unpredictable unstable operation due to the unique characteristic resulting from the machine learning.

As another example, with the purpose of controlling the operations among a plurality of vehicles, in a case where the event detection unit 110 detects the predetermined event, the control-rule change unit 120 may change the control rule to be used at the time of the autonomous driving to a rule (hereinafter, referred to as a "common rule") to be used in common among a plurality of control devices (the control device 100, the control device 502 of another vehicle, and control devices mounted in other vehicles that are not illustrated). The common rule can be prepared as, for example, a common rule within a range, such as over the whole world, for each country, for each area, for each vehicle type, or for each vehicle manufacturer. The common rule is stored in the memory 206 or the storage device 208 in advance, for example, in a format shown in Fig. 5. The common rule may be saved in the map data for autonomous driving stored in, for example, the storage device 208, a server device outside the vehicle V, or the like. The rule that is common among a plurality of control devices is used, whereby it is possible to reduce unevenness of the operation at the time of the autonomous driving of each vehicle and to control the operation of each vehicle. A specific example of the common rule is not particularly limited, and is "a vehicle moves to a lane different from a lane to which a preceding vehicle moves", or the like.

### <Third Specific Example>

In the specific example, a case where the event detection unit 110 detects "the presence of an obstacle (falling object, sinking of a road surface, flooding, or the like) on a lane on which the vehicle is traveling" as the predetermined event will be described.

For example, the event detection unit 110 acquires information (for example, positional coordinates on the map information, information of the lane on which the obstacle is present, and the like) indicating a position of the obstacle by way of the control device 502 of another vehicle or the road-to-vehicle communication device 504 provided along the road, thereby being able to detect the predetermined event. For example, in a case where an obstacle is detected using various sensors mounted in the another vehicle, the control device 502 of the another vehicle can generate information informing of the presence of the obstacle along with positional information (for example, position coordinates on the map information, information of a lane on which the obstacle is present, and the like) of the obstacle, and can transmit the generated information through vehicle-to-vehicle communication. In this case, the event detection unit 110 performs vehicle-to-vehicle communication with the control device 502 of the another vehicle, thereby being able to detect the predetermined event by way of the control device 502 of the another vehicle. The road-to-vehicle communication device 504 can collect information informing of the presence of the obstacle and the positional information of the obstacle from the control device 502 of the another vehicle and can broadcast the collected information to within the control area of the road-to-vehicle communication device 504. In this case, the event detection unit 110 receives information broadcasted from the road-to-vehicle communication device 504, thereby being able to detect the predetermined event by way of the road-to-vehicle communication device 504. Alternatively, the presence or absence (predetermined event) of an obstacle may be detected using the sensor device 300 mounted in the own vehicle. For example, the event detection unit 110 can recognize a shape of a road surface or an obstacle on the road surface on the basis of an image generated using the image sensor or a scanning result (distance image) with the LIDAR.

In this case, as in the second specific example, the control-rule change unit 120 can change the control rule to be used at the time of the autonomous driving to the default rule before the first control rule is constructed by the machine learning or a rule to be used in common among a plurality of control devices.

### <Fourth Specific Example>

In the specific example, a case where the event detection unit 110 detects "reception of information indicating an operation to be taken by the vehicle as the second control rule from the control device 502 of another vehicle or the road-to-vehicle communication device 504" as the predetermined event will be described.

As an example, first, the control device 502 of another vehicle detects the presence or absence of an obstacle on a road surface or a vehicle in accident. For example, the control device 502 of the another vehicle can detect an obstacle on a road surface or a vehicle in accident on the basis of an output from the sensor device provided in the another vehicle. The control device 502 of the another vehicle can acquire information of an obstacle on a road surface or information relating to a vehicle in accident from the road-to-vehicle communication device 504 as well. In a case where an obstacle on a road surface or a vehicle in accident is detected, the control device 502 of the another vehicle controls the another vehicle so as to avoid the obstacle or the vehicle in accident and generates information indicating an operation to be taken by a following vehicle. Then, the control device 502 of the another vehicle provides, for example, a dedicated identifier to the generated information, and then, transmits the information toward the following vehicle through a communication device. As another example, the road-to-vehicle communication device 504 may detect the presence or absence of an obstacle on a road surface or a vehicle in accident on the basis of an output from the sensor device provided in the another vehicle. For example, the road-to-vehicle communication device 504 collects information (information of the sensor) relating to the obstacle on the road surface or the vehicle in accident from peripheral vehicles and decides an operation to be taken by each vehicle in a target area using the collected information. The road-to-vehicle communication device 504 provides, for example, a dedicated identifier to information indicating the decided operation, and then, broadcasts information within the target area. As an example of a specific instruction, in a case where an obstacle is detected on a center lane of a road having three lanes, the control device 502 of the another vehicle or the road-to-vehicle communication device 504 can transmit an instruction to the effect that a vehicle having an odd number at the end of a number plate moves to a left lane and a vehicle having an even number at the end of the number place moves to a right lane. In a case where information indicating the operation to be taken by the own vehicle is received from the control device 502 of the another vehicle or the road-to-vehicle communication device 504, the event detection unit 110 controls the operation at the time of the autonomous driving of the own vehicle using the received information as the second control rule. With the identifier provided to information received from the another vehicle, the event detection unit 110 can determine that the received information is "information indicating the operation to be taken by the own vehicle". In the specific example, the operation at the time of the autonomous driving is controlled on the basis of the instruction transmitted from the control device 502 of the another vehicle or the road-to-vehicle communication device 504. With this, an unstable operation due to the unique characteristic resulting from the machine learning is restrained.

### [Second Embodiment]

In the first embodiment, an example where the common rule is used among a plurality of control devices (the control devices 100, the control devices 502 of another vehicle, and the control device mounted in a vehicle not shown in the drawing) has been described. The control device 100 of the embodiment further includes a configuration for updating the common rule.

### [Functional Configuration]

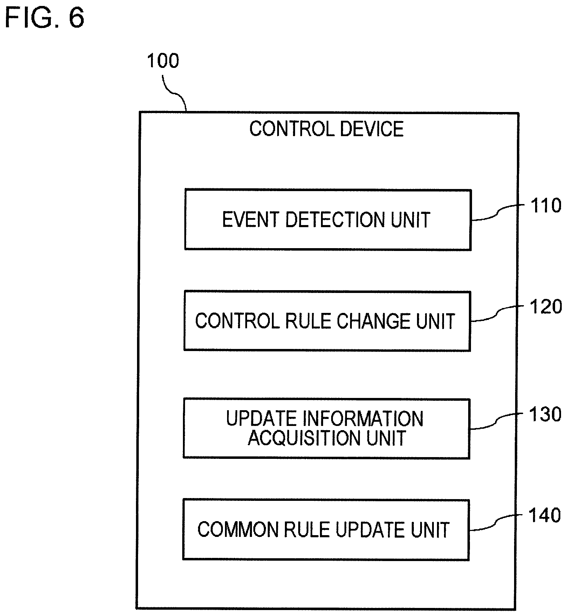

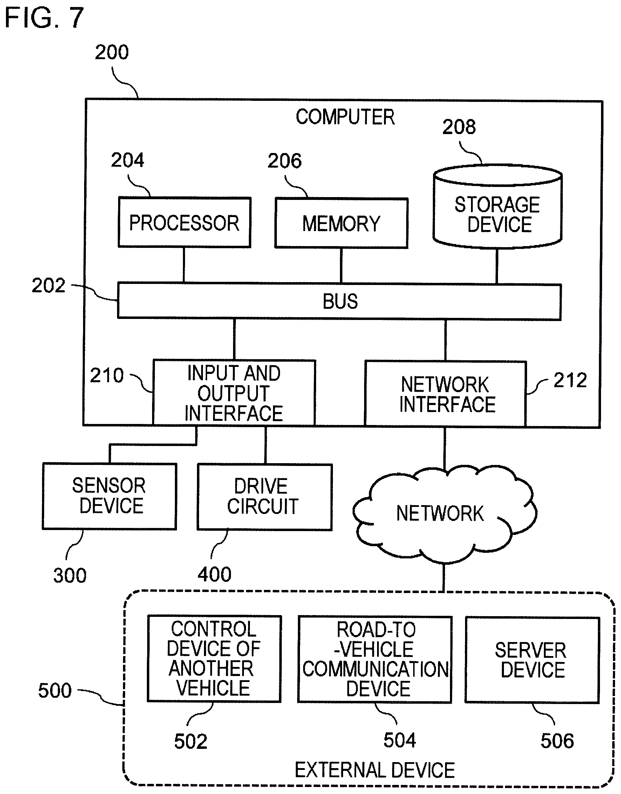

Fig. 6 is a block diagram conceptually showing the functional configuration of the control device 100 in the second embodiment. As shown in Fig. 6, the control device 100 of the embodiment further includes an update information acquisition unit 130 and a common rule update unit 140. As shown in Fig. 7, in the embodiment, a server device 506 that generates information for updating the common rule is connected to perform communication with the control device 100.

The update information acquisition unit 130 acquires update information of the common rule from the server device 506. As an example, the server device 506 performs learning with a result (for example, variation in the degree of congestion) of the autonomous driving control based on the common rule as a reward and updates the common rule. Specifically, the server device 506 acquires information indicating how each vehicle operates according to the common rule and information indicating variation in the degree of congestion from each vehicle, a sensor device provided in the periphery of a road, and the like and evaluates the current common rule. Then, the server device 506 updates the common rule on the basis of an evaluation result. For example, it is assumed that a reward "the degree of congestion is deteriorated than a tolerance" is obtained as a result of performing an "operation A" defined by the common rule. In this case, a given penalty or a penalty according to the degree of deterioration is provided to the "operation A", and information for updating the common rule is generated so as to lower the selection priority of the operation A. In addition to the examples described herein, a configuration may be made in which a person in charge of management manually inputs the update information of the common rule to the server device 506 and delivers the update information to the control device of each vehicle. The server device 506 delivers the update information of the common rule generated in this manner to each vehicle. The server device 506 may be configured to deliver a new common rule updated using the update information of the common rule toward the control device of each vehicle. The update information of the common rule delivered from the server device 506 may be delivered to the control device 100 of each vehicle by way of the road-to-vehicle communication device 504.

The common rule update unit 140 updates the common rule stored in the memory 206 or the storage device 208 using the update information of the common rule acquired by the update information acquisition unit 130.

### [Hardware Configuration]

Fig. 7 is a diagram illustrating the hardware configuration of the control device 100 of the second embodiment. In the embodiment, the storage device 208 stores program modules that implement the functions of the update information acquisition unit 130 and the common rule update unit 140. The processor 204 reads the program modules to the memory 206 and executes the program modules, thereby implementing the functions of the update information acquisition unit 130 and the common rule update unit 140. In the embodiment, the server device 506 is connected through the network interface 212.

### [Operation Example]

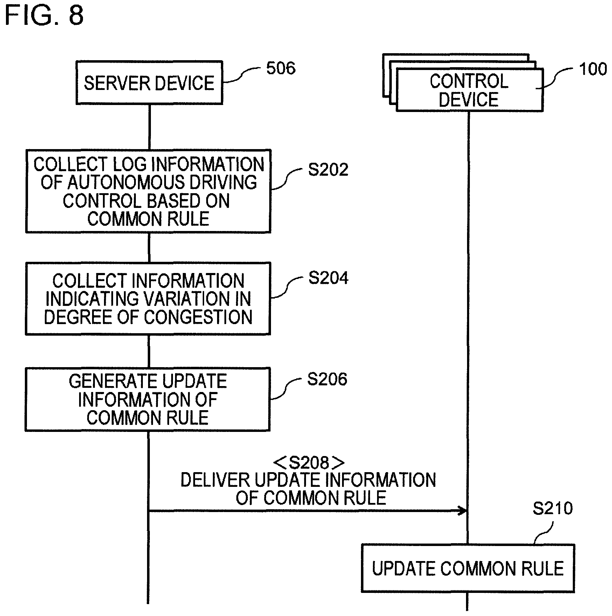

A flow of processing that is executed by the control device 100 of the second embodiment will be described referring to Fig. 8. Fig. 8 is a sequence diagram illustrating a flow of processing that is executed by the control device 100 of the second embodiment.

The server device 506 collects log information (for example, information indicating an operation in the common rule selected at the time of the autonomous driving and a time thereof, or the like) of the autonomous driving control based on the common rule from a plurality of control devices mounted in the respective vehicles (S202). The server device 506 acquires information indicating variation in the degree of congestion from the road-to-vehicle communication device 504 provided along the road along with time information (S204). Then, the server device 506 generates the update information of the common rule on the basis of an operation selected by each vehicle according to the current common rule and a result (reward) accompanied by the operation (S206) . The server device 506 can identify a correspondence relationship of information collected in the processing of S202 and S204 on the basis of the time information. Then, the server device 506 delivers the update information of the common rule generated in the processing of S206 to the control device of each vehicle (S208). The server device 506 may transmit the update information of the common rule to the road-to-vehicle communication device 504 once, and may deliver the update information of the common rule to each vehicle by way of the road-to-vehicle communication device 504.

In each vehicle, the update information of the common rule delivered by the update information acquisition unit 130 in S208 is received. The common rule update unit 140 updates the current common rule stored in the memory 206 or the storage device 208 on the basis of the update information of the common rule acquired by the update information acquisition unit 130 (S210).

According to the above-described embodiment, it is possible to optimize the common rule stored in each vehicle with the update information of the common rule delivered from the server device 506.

Although the embodiments and examples have been described above referring to the drawings, these are merely illustrative of the invention, and various configurations other than those described above can also be employed.

This application claims priority based on Japanese Patent Application No. 2017-138957, filed July 18, 2017.

## Claims

1. A control device (100) comprising:
an event detection unit (110) that determines whether or not an event to be a trigger of changing a control rule at the time of autonomous driving of a vehicle is detected while the vehicle is performing the autonomous driving using a first control rule based on machine learning;
a control-rule change unit (120) that changes the control rule at the time of the autonomous driving of the vehicle to a second control rule according to the event to be the trigger in a case where the event to be the trigger is detected by the event detection unit (110);
**characterised in that**
the second control rule is a common rule that is used in common among a plurality of vehicles; and **characterised by**
an update information acquisition unit (130) that acquires update information of the common rule; and
a common rule update unit (140) that updates the common rule on the basis of the update information.

2. The control device according to claim 1,
wherein the event detection unit (110) detects the event to be the trigger by way of another vehicle or a road-to-vehicle communication device (504).

3. The control device according to claim 1,
wherein the event detection unit (110) detects the event to be the trigger on the basis of an output from a sensor (300) mounted in the vehicle or dynamic information included in map data for autonomous driving to be used at the time of the autonomous driving of the vehicle.

4. The control device according to claim 3,
wherein the event detection unit detects, as the event to be the trigger, information indicating that an abnormality occurs in the sensor or that the dynamic information is any one of an accident, congestion, weather, traffic control, and road construction.

5. The control device according to claim 4,
wherein the second control rule is a rule for stopping the vehicle.

6. The control device according to any one of claims 1 to 3,
wherein, when the vehicle is traveling on a road having a plurality of lanes on each side, the event detection unit detects an occurrence of an accident in at least one of the plurality of lanes as the event to be the trigger.

7. The control device according to any one of claims 1 to 3,
wherein the event detection unit detects presence of an obstacle on a course of the vehicle as the event to be the trigger.

8. The control device according to claim 2,
wherein the event detection unit detects reception of information indicating an operation to be taken by the vehicle as the second control rule from the another vehicle or the road-to-vehicle communication device as the event to be the trigger.

9. A control method that is executed by a computer, the control method comprising:
a step of determining whether or not an event to be a trigger of changing a control rule at the time of autonomous driving of a vehicle is detected while the vehicle is performing the autonomous driving using a first control rule based on machine learning; and
a step of changing the control rule at the time of the autonomous driving of the vehicle to a second control rule according to the event to be the trigger in a case where the event to be the trigger is detected;
**characterised in that**
the second control rule is a common rule that is used in common among a plurality of vehicles; and **characterised by**
a step of acquiring update information of the common rule; and
a step of updating the common rule on the basis of the update information.

10. A program that causes a computer to function as:
an event detection unit (110) that determines whether or not an event to be a trigger of changing a control rule at the time of autonomous driving of a vehicle is detected while the vehicle is performing the autonomous driving using a first control rule based on machine learning; and
a control-rule change unit (120) that changes the control rule at the time of the autonomous driving of the vehicle to a second control rule according to the event to be the trigger in a case where the event to be the trigger is detected by the event detection unit (110),
wherein the second control rule is a common rule that is used in common among a plurality of vehicles;
an update information acquisition unit (130) that acquires update information of the common rule; and
a common rule update unit (140) that updates the common rule on the basis of the update information.

## Patentansprüche

1. Steuervorrichtung (100), die aufweist:
eine Ereignisdetektionseinheit (110), die bestimmt, ob ein Ereignis als Auslöser für eine Änderung einer Steuerregel beim autonomen Fahren eines Fahrzeugs detektiert wird, während das Fahrzeug das autonome Fahren mit Hilfe einer ersten Steuerregel auf der Grundlage von Maschinenlernen durchführt;
eine Steuerregel-Änderungseinheit (120), die die Steuerregel beim autonomen Fahren des Fahrzeugs in eine zweite Steuerregel gemäß dem Ereignis als Auslöser in einem Fall ändert, in dem das Ereignis als Auslöser durch die Ereignisdetektionseinheit (110) detektiert wird;
**dadurch gekennzeichnet, dass**
die zweite Steuerregel eine gemeinsame Regel ist, die unter mehreren Fahrzeugen gemeinsam verwendet wird; und **gekennzeichnet durch**
eine Aktualisierungsinformations-Erfassungseinheit (130), die Aktualisierungsinformationen der gemeinsamen Regel erfasst; und
eine Aktualisierungseinheit (140) für die gemeinsame Regel, die die gemeinsame Regel auf der Grundlage der Aktualisierungsinformationen aktualisiert.

2. Steuervorrichtung nach Anspruch 1,
wobei die Ereignisdetektionseinheit (110) das Ereignis als Auslöser auf dem Weg über ein anderes Fahrzeug oder eine Straße-zu-Fahrzeug-Kommunikationsvorrichtung (504) detektiert.

3. Steuervorrichtung nach Anspruch 1,
wobei die Ereignisdetektionseinheit (110) das Ereignis als Auslöser auf der Grundlage einer Ausgabe von einem im Fahrzeug eingebauten Sensor (300) oder von dynamischen Informationen detektiert, die zu Kartendaten zum autonomen Fahren gehören, die beim autonomen Fahren des Fahrzeugs zu verwenden sind.

4. Steuervorrichtung nach Anspruch 3,
wobei die Ereignisdetektionseinheit als das Ereignis als Auslöser Informationen detektiert, die angeben, dass eine Anomalität im Sensor vorliegt oder dass die dynamischen Informationen eine der folgenden sind: Unfall, Stau, Wetter, Verkehrslenkung und Straßenbau.

5. Steuervorrichtung nach Anspruch 4,
wobei die zweite Steuerregel eine Regel zum Stoppen des Fahrzeugs ist.

6. Steuervorrichtung nach einem der Ansprüche 1 bis 3,
wobei bei der Fahrt des Fahrzeugs auf einer Fahrbahn mit mehreren Spuren auf jeder Seite die Ereignisdetektionseinheit einen eingetretenen Unfall auf mindestens einer der mehreren Spuren als das Ereignis als Auslöser detektiert.

7. Steuervorrichtung nach einem der Ansprüche 1 bis 3,
wobei die Ereignisdetektionseinheit ein vorhandenes Hindernis auf einem Kurs des Fahrzeugs als das Ereignis als Auslöser detektiert.

8. Steuervorrichtung nach Anspruch 2,
wobei die Ereignisdetektionseinheit den Empfang von Informationen, die einen vom Fahrzeug durchzuführenden Betrieb als zweite Steuerregel angeben, vom anderen Fahrzeug oder von der Straße-zu-Fahrzeug-Kommunikationsvorrichtung als das Ereignis als Auslöser detektiert.

9. Steuerverfahren, das durch einen Computer ausgeführt wird, wobei das Steuerverfahren aufweist:
einen Schritt des Bestimmens, ob ein Ereignis als Auslöser für eine Änderung einer Steuerregel beim autonomen Fahren eines Fahrzeugs detektiert wird, während das Fahrzeug das autonome Fahren mit Hilfe einer ersten Steuerregel auf der Grundlage von Maschinenlernen durchführt; und
einen Schritt des Änderns der Steuerregel beim autonomen Fahren des Fahrzeugs in eine zweite Steuerregel gemäß dem Ereignis als Auslöser in einem Fall, in dem das Ereignis als Auslöser detektiert wird;
**dadurch gekennzeichnet, dass**
die zweite Steuerregel eine gemeinsame Regel ist, die unter mehreren Fahrzeugen gemeinsam verwendet wird; und **gekennzeichnet durch**
einen Schritt des Erfassens von Aktualisierungsinformationen der gemeinsamen Regel; und
einen Schritt des Aktualisierens der gemeinsamen Regel auf der Grundlage der Aktualisierungsinformationen.

10. Programm, das einen Computer veranlasst, zu fungieren als:
eine Ereignisdetektionseinheit (110), die bestimmt, ob ein Ereignis als Auslöser für eine Änderung einer Steuerregel beim autonomen Fahren eines Fahrzeugs detektiert wird, während das Fahrzeug das autonome Fahren mit Hilfe einer ersten Steuerregel auf der Grundlage von Maschinenlernen durchführt; und
eine Steuerregel-Änderungseinheit (120), die die Steuerregel beim autonomen Fahren des Fahrzeugs in eine zweite Steuerregel gemäß dem Ereignis als Auslöser in einem Fall ändert, in dem das Ereignis als Auslöser durch die Ereignisdetektionseinheit (110) detektiert wird,
wobei die zweite Steuerregel eine gemeinsame Regel ist, die unter mehreren Fahrzeugen gemeinsam verwendet wird;
eine Aktualisierungsinformations-Erfassungseinheit (130), die Aktualisierungsinformationen der gemeinsamen Regel erfasst; und
eine Aktualisierungseinheit (140) für die gemeinsame Regel, die die gemeinsame Regel auf der Grundlage der Aktualisierungsinformationen aktualisiert.

## Revendications

1. Dispositif de commande (100) comprenant :
une unité de détection d'événement (110) qui détermine si un événement destiné à être un déclencheur pour modifier une règle de commande au moment de la conduite autonome d'un véhicule est détecté ou non pendant que le véhicule effectue la conduite autonome à l'aide d'une première règle de commande basée sur l'apprentissage automatique ;
une unité de modification de règle de commande (120) qui modifie la règle de commande au moment de la conduite autonome du véhicule en une deuxième règle de commande en fonction de l'événement destiné à être un déclencheur dans le cas où l'événement destiné à être un déclencheur est détecté par l'unité de détection d'événement (110) ;
**caractérisé en ce que**
la deuxième règle de commande est une règle commune qui est utilisée par une pluralité de véhicules ; et **caractérisé par**
une unité d'acquisition d'informations de mise à jour (130) qui acquiert des informations de mise à jour de la règle commune ; et
une unité de mise à jour de règle commune (140) qui met à jour la règle commune sur la base des informations de mise à jour.

2. Dispositif de commande selon la revendication 1,
dans lequel l'unité de détection d'événement (110) détecte l'événement destiné à être un déclencheur au moyen d'un autre véhicule ou d'un dispositif de communication route-véhicule (504).

3. Dispositif de commande selon la revendication 1,
dans lequel l'unité de détection d'événement (110) détecte l'événement destiné à être un déclencheur sur la base d'une sortie provenant d'un capteur (300) monté dans le véhicule, ou d'informations dynamiques incluses dans des données de carte pour une conduite autonome, à utiliser au moment de la conduite autonome du véhicule.

4. Dispositif de commande selon la revendication 3,
dans lequel l'unité de détection d'événement détecte, en tant que l'événement destiné à être un déclencheur, des informations indiquant qu'une anomalie se produit dans le capteur ou que les informations dynamiques correspondent à l'un des éléments parmi un accident, un embouteillage, des conditions météorologiques, un contrôle de la circulation, et une construction routière.

5. Dispositif de commande selon la revendication 4,
dans lequel la deuxième règle de commande est une règle destinée à arrêter le véhicule.

6. Dispositif de commande selon l'une quelconque des revendications 1 à 3,
dans lequel, lorsque le véhicule circule sur une route présentant une pluralité de voies de chaque côté, l'unité de détection d'événement détecte l'occurrence d'un accident dans au moins une de la pluralité de voies, en tant que l'événement destiné à être un déclencheur.

7. Dispositif de commande selon l'une quelconque des revendications 1 à 3,
dans lequel l'unité de détection d'événement détecte la présence d'un obstacle sur la trajectoire du véhicule, en tant que l'événement destiné à être un déclencheur.

8. Dispositif de commande selon la revendication 2,
dans lequel l'unité de détection d'événement détecte la réception d'informations indiquant une opération à effectuer par le véhicule en tant que la deuxième règle de commande, en provenance d'un autre véhicule ou d'un dispositif de communication route-véhicule, en tant que l'événement destiné à être un déclencheur.

9. Procédé de commande qui est exécuté par un ordinateur, le procédé de commande comprenant :
une étape consistant à déterminer si un événement destiné à être un déclencheur pour modifier une règle de commande au moment de la conduite autonome d'un véhicule est détecté ou non pendant que le véhicule effectue la conduite autonome à l'aide d'une première règle de commande basée sur l'apprentissage automatique ; et
une étape consistant à modifier la règle de commande au moment de la conduite autonome du véhicule en une deuxième règle de commande en fonction de l'événement destiné à être un déclencheur dans le cas où l'événement destiné à être un déclencheur est détecté ;
**caractérisé en ce que**
la deuxième règle de commande est une règle commune qui est utilisée conjointement par une pluralité de véhicules ; et **caractérisé par**
une étape consistant à acquérir des informations de mise à jour de la règle commune ; et
une étape consistant à mettre à jour la règle commune sur la base des informations de mise à jour.

10. Programme qui amène un ordinateur à fonctionner en tant que :
une unité de détection d'événement (110) qui détermine si un événement destiné à être un déclencheur pour modifier une règle de commande au moment de la conduite autonome d'un véhicule est détecté ou non pendant que le véhicule effectue la conduite autonome à l'aide d'une première règle de commande basée sur l'apprentissage automatique ; et
une unité de modification de règle de commande (120) qui modifie la règle de commande au moment de la conduite autonome du véhicule en une deuxième règle de commande en fonction de l'événement destiné à être un déclencheur dans le cas où l'événement destiné à être un déclencheur est détecté par l'unité de détection d'événement (110) ;
dans lequel la deuxième règle de commande est une règle commune qui est utilisée conjointement par une pluralité de véhicules ;
une unité d'acquisition d'informations de mise à jour (130) qui acquiert des informations de mise à jour de la règle commune ; et
une unité de mise à jour de règle commune (140) qui met à jour la règle commune sur la base des informations de mise à jour.
